# DEMANDE DE BREVET EUROPEEN

(11) **EP 4 535 441 A1**
(43) Date de publication de la demande: **09.04.2025**
(21) Numéro de dépôt: 23201365.6
(22) Date de dépôt: 03.10.2023
(51) Int. Cl.: H01M 4/04, H01M 4/13, H01M 4/139, H01M 4/62, H01M 10/0525, H01M 4/131, H01M 4/136, H01M 10/0565

(54) **ÉLECTRODE SANS SOLVANT**

(71) Demandeur: The Swatch Group Research and Development Ltd, 2074 Marin (CH)
(72) Inventeur: MARINAKIS, Nathalie, 2074 Marin-Epagnier (CH); CAMILLO, Rémy, 2087 Cornaux (CH)
(74) Mandataire: ICB SA

(57) **Abrégé**

La présente invention se rapporte à une électrode (2,3) sans solvant pour une batterie (1) du type lithium-ion comprenant :
- une matière active qui est source d'ions de lithium, capable de recevoir des ions de lithium et/ou de restituer des ions lithium dans sa structure ;
- une matière à base de carbone permettant d'augmenter la conductivité électrique de l'électrode ;
caractérisée en ce qu'elle comporte en outre un polymère avec au moins un groupe maléimide, un groupe acrylate ou un groupe méthacrylate, ledit polymère faisant office de liant entre la matière active et la matière à base de carbone.

## Description

### Domaine technique de l'invention

La présente invention se rapporte à une électrode sans solvant et à son procédé de fabrication. Elle se rapporte aussi à une cellule comprenant ladite électrode sans solvant et optionnellement une électrolyte solide.

### Arrière-plan technologique

Des batteries classiques, telles que des batteries du type lithium-ion (Li-ion), comprenant un électrolyte liquide sont connues depuis des décennies. Cependant, il est connu que ces électrolytes liquides peuvent nuire à la sécurité de la batterie, par exemple suite à la génération de dendrites de lithium métallique qui peuvent causer des court-circuits dans la batterie. En outre, il est possible d'avoir des fuites d'électrolyte si l'étanchéité de la batterie est défaillante.

Récemment, des batteries comprenant un électrolyte solide (anglais : solid state electrolyte, abréviation : SSE) ont été développées. Les électrolytes solides servent à remplacer les électrolytes liquides dans les batteries du type métal alcalin ou métal alcalino-terreux - ion (p.ex. Li-ion) et du type ayant une anode en métal alcalin pur ou en métal alcalino-terreux pur (p.ex. Li-métal), parce qu'ils offrent une solution aux problèmes de sécurité et de fuites liés aux électrolytes liquides. Le désavantage des électrolytes solides est qu'il est plus difficile de créer une interface intime entre l'électrode et l'électrolyte. Cela peut se traduire par une réduction de la durée de vie de la batterie.

En parallèle, toujours avec pour objet d'augmenter la durée de vie des batteries et de développer des batteries plus sûres, des batteries tout solide incluant des électrodes sans solvant ont été développées. En éliminant le solvant NMP (N-méthyl-2-pyrrolidone), qui est le plus fréquemment utilisé dans la formulation des électrodes, une économie de 47% sur la dépense totale de consommation d'énergie lors de la production peut être envisagée. En effet, la présence de solvants nécessite des opérations de déliantage à température qui entraînent des pertes d'énergie sans pour autant mener à une totale élimination de ces solvants qui, comme le NMP, sont hautement toxiques et nocifs pour la santé. De l'eau pourrait supprimer les coûts de recyclage des solvants et résoudre les problèmes de toxicité, mais la production d'électrodes épaisses d'une haute densité d'énergie avec une excellente teneur mécanique reste un défi.

### Résumé de l'invention

La présente invention a pour objet de pallier aux désavantages précités en développant une électrode sans solvant, ayant une excellente tenue mécanique, une haute densité d'énergie tout en étant à même de former une interface intime avec un électrolyte solide.

Plus précisément, la présente invention consiste à réaliser une électrode sans solvant comprenant une matière active, source ou réceptrice d'ions de lithium, une matière à base de carbone pour augmenter la conductivité électrique de l'électrode et un polymère ayant pour objet de lier la matière active et la matière à base de carbone. Avantageusement, l'électrode est uniquement constituée de la matière active, de la matière à base de carbone et du polymère.

La nouvelle formulation de l'électrode permet l'élimination complète des solvants pour la fabrication des électrodes. La fabrication en est simplifiée et le coût de production diminué.

Combiné avec un électrolyte solide ayant une composition semblable à celle du polymère servant de liant dans l'électrode, la durée de vie de la batterie est augmentée et sa performance est améliorée grâce à l'interface intime entre les matériaux de l'électrode et de l'électrolyte.

Plus précisément, la présente invention se rapporte à une électrode sans solvant pour une batterie du type lithium-ion comprenant :
- - une matière active qui est source d'ions de lithium, capable de recevoir des ions de lithium et/ou de restituer des ions lithium dans sa structure ;
- - une matière à base de carbone permettant d'augmenter la conductivité électrique de l'électrode ;
caractérisée en ce qu'elle comporte en outre un polymère avec au moins un groupe maléimide, un groupe acrylate ou un groupe méthacrylate, ledit polymère faisant office de liant entre la matière active et la matière à base de carbone.

Selon des variantes de l'invention, l'électrode présente une ou plusieurs des caractéristiques suivantes :
- le polymère comporte également un sel d'un métal alcalin et/ou d'un métal alcalino-terreux ;
- ledit au moins groupe maléimide, groupe acrylate ou groupe méthacrylate est un groupe d'extrémité ;
- le polymère comporte au moins un groupe maléimide et un sel de lithium ou de sodium ;
- la matière active comprend du LiFePO₄, du LiNiMnCoO₂, du LiCoO₂, du Li₄Ti₅O₁₂ ou du graphite, et la matière à base de carbone comporte du charbon actif, du noir de carbone et/ou du graphite ;
- elle comporte la matière active dans un pourcentage en poids compris entre 50% et 80%, de préférence entre 60% et 75%, la matière à base de carbone dans un pourcentage en poids compris entre 0.5% et 5%, de préférence entre 1% et 4%, le polymère dans un pourcentage en poids compris entre 10% et 45%, de préférence entre 20% et 35% ;
- ledit polymère est obtenu à partir d'une composition polymérisable comprenant :
   - un premier polymère comprenant un premier groupement et un deuxième groupement, le premier groupement étant capable de coordonner des cations d'un métal alcalin et/ou d'un métal alcalino-terreux, le deuxième groupement étant photo-activable et/ou thermo-activable ;
   - un oligomère ayant au moins deux groupes photo-activables et/ou thermo-activables ;
   - un deuxième polymère comprenant un troisième groupement, le troisième groupement comprenant un sel d'un métal alcalin ou d'un métal alcalino-terreux ;
   - un plastifiant ;
   - un initiateur de polymérisation permettant d'initier la polymérisation entre le deuxième groupement du premier polymère et les groupes photo-activables et/ou thermo-activables de l'oligomère sous l'effet d'une température comprise entre 20°C et 150°C ou d'un rayonnement ;
   - un ou plusieurs du deuxième groupement et des groupes photo-activables et/ou thermo-activables étant un groupe maléimide, un groupe acrylate ou un groupe méthacrylate ;
- la composition polymérisable comprend entre 10% et 50% en poids du premier polymère, entre 1% et 20% en poids de l'oligomère, entre 1% et 20% en poids du deuxième polymère, entre 20% et 60% en poids du plastifiant, et entre 0.01 % et 2% en poids de l'initiateur de polymérisation, basé sur le poids total de la composition polymérisable;
- la composition polymérisable comprend en outre entre 0.5% et 5% en poids d'un sel d'un métal alcalin et/ou un sel d'un métal alcalino-terreux, basé sur le poids total de la composition polymérisable ;
- le premier groupement de la composition polymérisable comporte un groupement d'oxyde de polyéthylène.

Le terme « photo-activable » tel qu'utilisé dans la présente divulgation inclut des composants, des molécules, des groupes ou des groupements qui peuvent être activés sous l'effet d'un rayonnement, tel que - sans être limité à celui-ci - un rayonnement ultraviolet (UV), un rayonnement infrarouge (IR), un rayonnement de la lumière visible, ou des combinaisons de ceux-ci.

Le terme « thermo-activable » tel qu'utilisé dans la présente divulgation inclut des composants, des molécules, des groupes ou des groupements qui peuvent être activés sous l'effet d'un changement de température. En particulier, le changement de température est un réchauffement. Avantageusement, la température d'activation est entre 20°C et 150°C, de préférence entre 25°C et 100°C.

L'activation par chaleur et/ou par un rayonnement inclut, sans être limitatif, une activation permettant une oligomérisation, une polymérisation ou une réticulation, et/ou l'initiation d'une oligomérisation, une polymérisation ou une réticulation.

Un « groupe d'extrémité » est considéré comme un groupe qui est présent à une extrémité (de la chaîne) du polymère.

Un « oligomère téléchélique » tel qu'utilisé dans la présente divulgation est considéré comme un oligomère capable de subir une polymérisation ultérieure du fait de la présence d'au moins un groupe réactif à chacune des extrémités (de la chaîne) de l'oligomère.

Un deuxième aspect de l'invention concerne une cellule comprenant pour au moins une des deux électrodes, une électrode sans solvant telle que décrite précédemment.

Avantageusement, ladite cellule comprend en outre un électrolyte solide réalisé à base dudit polymère avec au moins un groupe maléimide, un groupe acrylate ou un groupe méthacrylate.

Un troisième aspect de l'invention concerne un procédé de fabrication de l'électrode sans solvant telle que décrite précédemment, comprenant les étapes de :
- Polymérisation de la composition polymérisable telle que décrite précédemment pour obtenir le polymère avec au moins un groupe maléimide, un groupe acrylate ou un groupe méthacrylate ;
- Mélange dudit polymère avec une poudre de la matière active et une poudre de la matière à base de carbone ;
- Pressage à chaud du mélange obtenu pour réaliser l'électrode.

Avantageusement, le polymère est broyé pour obtenir une poudre avant l'étape de mélange. En variante, après l'étape de mélange et avant l'étape de pressage, il y a une étape de broyage du mélange, préférentiellement sous azote.

Avantageusement, le pressage est réalisé à une température comprise entre 90°C et 150°C, de préférence entre 100°C et 140°C, sous une force comprise entre 5 kN et 25 kN, de préférence entre 10 kN et 20 kN, pendant un temps compris entre 1 minute et 20 minutes, de préférence entre 3 minutes et 10 minutes.

Avantageusement, le pressage est réalisé entre une feuille agissant comme séparateur et un collecteur de courant.

### Brève description des figures

Les buts, avantages et caractéristiques sont montrés dans les figures, qui illustrent des modes d'exécution sans être limitatif :
- la figure 1 représente un premier groupement d'un composant de la composition polymérisable ;
- la figure 2 représente un deuxième groupement d'un composant de la composition polymérisable ;
- la figure 3 représente un premier composant de la composition polymérisable ;
- la figure 4 représente un deuxième composant de la composition polymérisable ;
- la figure 5 représente un troisième composant de la composition polymérisable ;
- la figure 6 représente les composants d'une batterie, en particulier une pile ;
- la figure 7 représente une électrode sans solvant selon l'invention ;
- la figure 8 représente la capacité surfacique d'une cellule comprenant une électrode selon l'invention en fonction du nombre de cycles de charge et décharge ;
- la figure 9 représente le voltage et le courant en fonction du temps pour les différents cycles sur une cellule comprenant une électrode selon l'invention.

### Description détaillée de l'invention

La présente invention se rapporte à une électrode sans solvant. Cette électrode comporte une matière active, une matière à base de carbone et un polymère qui fait office de liant entre la matière active et la matière à base de carbone. Préférentiellement, l'électrode est constituée de la matière active, de la matière à base de carbone et du polymère qui fait office de liant.

La matière active est source d'ions de lithium, capable de recevoir des ions de lithium et/ou de restituer des ions lithium dans sa structure. Préférentiellement, la matière active est choisie parmi le LiFePO₄, le LiNiMnCoO₂, le LiCoO₂, le Li₄Ti₅O₁₂ et le graphite. Pour une cathode, la matière active est source d'ions de lithium donc responsable de la capacité de l'électrode et apte à recevoir des ions de lithium dans sa structure. Pour une anode, la matière active est capable de recevoir et de restituer des ions de lithium dans sa structure par intercalation. Pour une cathode, la matière active est plus spécifiquement du LiFePO₄, du LiNiMnCoO₂ ou du LiCoO₂, et pour une anode, elle est plus spécifiquement du Li₄Ti₅O₁₂ ou du graphite.

La matière à base de carbone a pour objet d'augmenter la conductivité électrique de l'électrode. Préférentiellement, elle comporte ou est constituée du charbon actif, du noir de carbone et/ou du graphite.

Le polymère faisant office de liant comporte au moins un groupe maléimide, un groupe acrylate ou un groupe méthacrylate. De préférence, le groupe maléimide, groupe acrylate ou groupe méthacrylate est un groupe d'extrémité. De préférence, il y a deux groupes maléimides, acrylates ou méthacrylates avec un groupe à chaque extrémité. De préférence, il y a au moins un groupe maléimide.

De préférence, le polymère comporte également un sel d'un métal alcalin et/ou d'un métal alcalino-terreux. Préférentiellement, il s'agit d'un sel de lithium ou d'un sel de sodium. Plus préférentiellement, il s'agit d'un sel de lithium. De préférence, le polymère comporte au moins un groupe maléimide et un sel de lithium ou un sel de sodium, plus préférentiellement un sel de lithium.

L'électrode comporte la matière active dans un pourcentage en poids compris entre 50% et 80%, de préférence entre 60% et 75%, la matière à base de carbone dans un pourcentage en poids compris entre 0.5% et 5%, de préférence entre 1% et 4%, le polymère dans un pourcentage en poids compris entre 10% et 45%, de préférence entre 20% et 35%.

Ledit polymère est obtenu à partir d'une composition polymérisable comprenant :
- un premier polymère comprenant un premier groupement et un deuxième groupement, le premier groupement étant capable de coordonner des cations d'un métal alcalin et/ou d'un métal alcalino-terreux, le deuxième groupement étant photo-activable et/ou thermo-activable ;
- un oligomère ayant au moins deux groupes photo-activables et/ou thermo-activables ;
- un deuxième polymère comprenant un troisième groupement, le troisième groupement comprenant un sel d'un métal alcalin ou d'un métal alcalino-terreux ;
- un plastifiant ;
- un initiateur de polymérisation permettant d'initier la polymérisation entre le deuxième groupement du premier polymère et les groupes photo-activables et/ou thermo-activables de l'oligomère sous l'effet d'une température comprise entre 20°C et 150°C ou d'un rayonnement ;
- un ou plusieurs du deuxième groupement et des groupes photo-activables et/ou thermo-activables étant un groupe maléimide, un groupe acrylate ou un groupe méthacrylate.

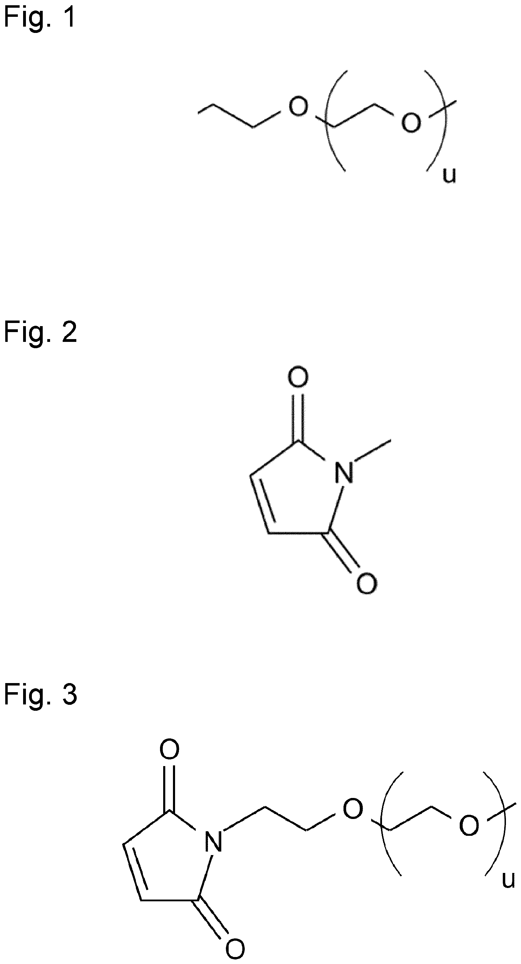

Le premier groupement du premier polymère de la composition polymérisable selon l'invention est capable de coordonner des cations d'un métal alcalin et/ou d'un métal alcalino-terreux, avantageusement les cations du métal alcalin et/ou du métal alcalino-terreux dans l'électrode selon l'invention. Autrement dit, le premier groupement est avantageusement choisi de façon à assurer la conductivité ionique au sein de l'électrode. Des exemples non-limitatifs du premier groupement sont un groupement d'oxyde de polyéthylène (PEO) tel que montré dans la figure 1, et un groupement de glycol de polyéthylène (PEG). Avantageusement, dans la figure 1, u indique le nombre de répétitions et est choisi entre 20 et 80, de préférence entre 30 et 70, plus préférentiellement entre 40 et 60, par exemple entre 50 et 55.

Le deuxième groupement du premier polymère de la composition polymérisable selon l'invention est un groupement fourni afin de permettre la polymérisation de la composition polymérisable. Le deuxième groupement est donc photo-activable et/ou thermo-activable. Des exemples non-limitatifs sont un groupement maléimide, tel que montré dans la figure 2, un groupement acrylate et un groupement méthacrylate.

Avantageusement, le premier polymère a une masse molaire comprise entre 1000 g/mol et 5000 g/mol, de préférence entre 1500 g/mol et 4000 g/mol, tel qu'entre 2000 g/mol et 3000 g/mol, plus préférentiellement entre 2250 g/mol et 2750 g/mol, par exemple entre 2350 g/mol et 2600 g/mol.

Avantageusement, le premier polymère contient entre 0.1 et 0.7 mEq (milli-équivalent) du deuxième groupement par gramme du premier polymère, de préférence entre 0.2 et 0.6 mEq, plus préférentiellement entre 0.3 et 0.5 mEq, par exemple entre 0.35 et 0.45 mEq, ou 0.4 mEq.

Des exemples particuliers du premier polymère sont l'α-methoxy ω-maléimide oxyde de polyéthylène, tel que montré dans la figure 3, le polyéthylène glycol méthacrylate (PEGMA), et l'α-methoxy ω-maléimide polyéthylène glycol.

Avantageusement, la composition polymérisable contient entre 10% et 50% en poids du premier polymère, de préférence entre 12% et 45% en poids, par exemple entre 15% et 40% en poids, basé sur le poids total de la composition polymérisable.

La composition polymérisable contient aussi un oligomère. L'oligomère a au moins deux groupes photo-activables et/ou thermo-activables. Ces groupes peuvent être polymérisés avec le deuxième groupement du premier polymère et/ou avec un troisième groupement d'un deuxième polymère. De préférence, les groupes de l'oligomère peuvent être polymérisés avec au moins le troisième groupement d'un deuxième polymère. Les groupes photo-activables et/ou thermo-activables peuvent être, sans être limitatif, un groupe maléimide, un acrylate et un méthacrylate.

Avantageusement, l'oligomère contient entre 0.1 et 0.7 mEq (milli-équivalent) de groupes photo-activables et/ou thermo-activables par gramme de l'oligomère, de préférence entre 0.2 et 0.9 mEq, plus préférentiellement entre 0.3 et 0.8 mEq, par exemple entre 0.4 et 0.7 mEq, ou entre 0.5 et 0.6 mEq.

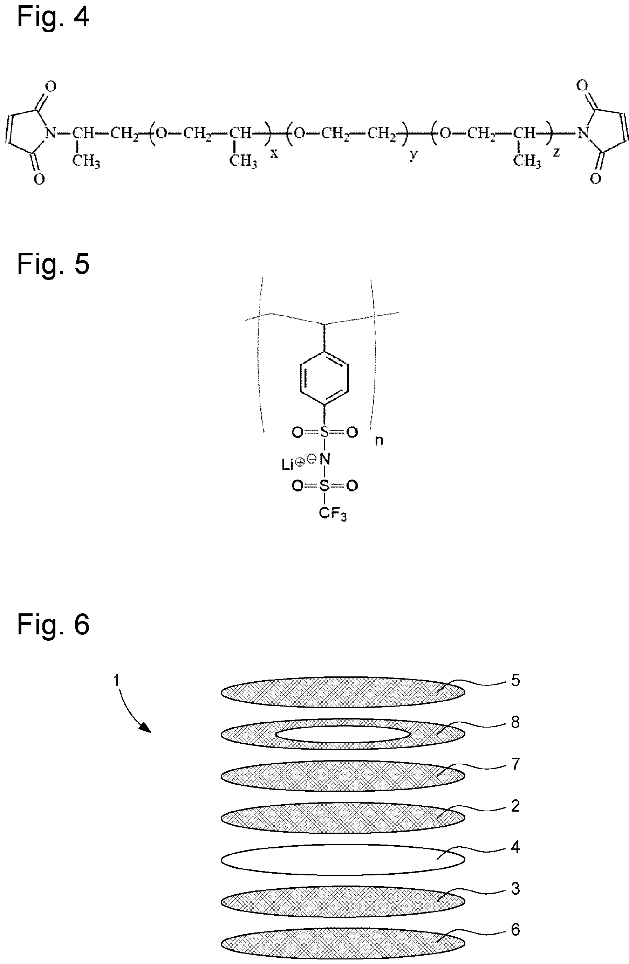

Un exemple de l'oligomère est le PPG-block-PEG-block-PPG, α,ω-bis(maléimide), représenté à la figure 4. Il s'agit d'un oxyde de polyéthylène et de polypropylène (PEO-PPO) ayant un groupe maléimide à chaque extrémité de la chaîne. Avantageusement, x + z est compris entre 2 et 20, de préférence entre 5 et 15, plus préférentiellement entre 6 et 12, par exemple entre 8 et 9. Avantageusement, y est compris entre 20 et 100, de préférence entre 40 et 80, plus préférentiellement entre 50 et 75, par exemple entre 60 et 70, ou entre 62 et 67.

Un autre exemple de l'oligomère est du glycol de polyéthylène (PEG) ayant un groupe méthacrylate (MA) à chaque extrémité de la chaîne (PEG-DiMA).

Avantageusement, l'oligomère a une masse molaire comprise entre 250 g/mol et 10000 g/mol, de préférence entre 500 g/mol et 5000 g/mol, plus préférentiellement entre 750 g/mol et 4000 g/mol, par exemple entre 1000 g/mol et 3750 g/mol, ou entre 2000 g/mol et 3600 g/mol.

Avantageusement, la composition polymérisable contient entre 1 % et 20% en poids de l'oligomère, de préférence entre 2% et 15% en poids, par exemple entre 3% et 15% en poids, basé sur le poids total de la composition polymérisable.

Avantageusement, l'oligomère comprend au moins un groupe photo-activable et/ou thermo-activable à chaque extrémité de la chaîne de l'oligomère, l'oligomère étant dans ce cas un oligomère téléchélique. En ajoutant un oligomère téléchélique dans la composition polymérisable, il est possible de mieux contrôler la polymérisation et donc la structure du réseau polymérique obtenu. Avantageusement, le réseau polymérique est un réseau linéaire polymérique. De plus, les chaînes entre deux noeuds de la composition polymérisée obtenue ainsi sont suffisamment longues pour que la composition polymérisée soit assez « lâche » et que l'électrode présente une excellente conductivité ionique.

Avantageusement, l'oligomère est capable d'agir comme un plastifiant et/ou un amplificateur de conductivité ionique de l'électrode.

Le deuxième polymère de la composition polymérisable contient un troisième groupement. Avantageusement, le troisième groupement comprend un sel d'un métal alcalin et/ou un sel d'un métal alcalino-terreux. Avantageusement, le métal alcalin contient du lithium, du sodium, du potassium, ou des combinaisons de ceux-ci. De préférence, le métal alcalin est du lithium. Avantageusement, le métal alcalino-terreux contient du magnésium, du béryllium, du calcium, ou des combinaisons de ceux-ci. De préférence, le métal alcalino-terreux est du magnésium.

Avantageusement, le troisième groupement est capable de fournir des cations du métal alcalin et/ou du métal alcalino-terreux dans l'électrode. Avantageusement, les cations du métal alcalin et/ou du métal alcalino-terreux peuvent, dans l'électrode, se déplacer le long du premier polymère et de l'oligomère. Ce déplacement induit la conductivité ionique de l'électrode. De plus, le troisième groupement, étant intégré à la chaîne du deuxième polymère, permet aussi, dans l'électrode, de réduire la mobilité des contre-anions du métal alcalin et/ou du métal alcalino-terreux, ce qui permet d'accroître la mobilité du métal alcalin et/ou du métal alcalino-terreux.

La figure 5 montre un exemple du deuxième polymère de la composition polymérisable de l'invention, dans lequel le troisième groupement est du lithium bis(trifluorométhane)sulfimide (LiSTFSI, CAS n° 210226-98-5).

Avantageusement, la composition polymérisable contient entre 1% et 20% en poids du deuxième polymère, de préférence entre 2% et 15% en poids, par exemple entre 5% et 10% en poids, basé sur le poids total de la composition polymérisable.

Le plastifiant dans la composition polymérisable permet avantageusement de solubiliser les composants de la composition. Un exemple du plastifiant inclut, sans être limitatif, le propylène carbonate.

Avantageusement, la composition polymérisable contient entre 20% et 60% en poids du plastifiant, de préférence entre 25% et 55% en poids, par exemple entre 30% et 50% en poids, basé sur le poids total de la composition polymérisable.

La composition comprend aussi un initiateur de polymérisation. L'initiateur de polymérisation permet d'initier la polymérisation entre le deuxième groupement du premier polymère, les groupes photo-activables et/ou thermo-activables de l'oligomère et le troisième groupement du deuxième polymère. L'initiation de la polymérisation, et/ou la polymérisation elle-même, est réalisée sous l'effet d'une température comprise entre 20°C et 200°C, de préférence entre 20°C et 150°C, plus préférentiellement entre 25°C et 100°C, telle que entre 30°C et 80°C, ou sous l'effet d'un rayonnement. Avantageusement, le rayonnement contient un ou plusieurs d'un rayonnement UV, d'un rayonnement IR et d'un rayonnement de la lumière visible (VIS).

Si l'étape de polymérisation est réalisée sous l'effet d'un rayonnement, de préférence un rayonnement UV, elle a une durée comprise entre 5 secondes et 20 minutes, par exemple entre 10 secondes et 15 minutes, de préférence entre 20 secondes et 10 minutes, plus préférentiellement entre 30 secondes et 5 minutes, telle que 4 minutes, 3 minutes, 2 minutes, 1 minute, ou 55 secondes, 50 secondes ou 45 secondes.

Si la polymérisation est effectuée sous l'effet de la température, elle a une durée comprise entre 1 minute et 5 heures, de préférence entre 5 minutes et 4 heures, par exemple entre 10 minutes et 3 heures, entre 20 minutes et 2,5 heures, ou entre 30 minutes et 2 heures.

L'initiateur de polymérisation est avantageusement de nature radicalaire. Cela veut dire, dans la présente divulgation, que l'initiateur de polymérisation est capable de libérer des radicaux sous l'effet de la température ou d'un rayonnement tel que décrit ci-dessus. Ces radicaux initient ensuite la polymérisation entre le premier polymère, le deuxième polymère et l'oligomère de la composition.

Des exemples de l'initiateur de polymérisation incluent, sans être limitatif, le 2,2'-azobis(isobutyronitrile) (AIBN) et 2-hydroxy-4'-(2-hydroxyéthoxy)-2-méthylpropiophenone (numéro CAS 106797-53-9).

Avantageusement, la composition polymérisable contient entre 0.01% et 2% en poids de l'initiateur de polymérisation, de préférence entre 0.1% et 1.5% en poids, par exemple entre 0.25% et 1% en poids, basé sur le poids total de la composition polymérisable.

La composition polymérisable peut aussi contenir un sel d'un métal alcalin et/ou un sel d'un métal alcalino-terreux. Avantageusement, le sel d'un métal alcalin contient, ou substantiellement consiste en, un sel de lithium. Avantageusement, le sel d'un métal alcalino-terreux contient, ou substantiellement consiste en, un sel de magnésium. Des exemples non-limitatifs des sels incluent le lithium bis(fluorosulfonyl) imide (LIFSI) et le lithium bis(trifluoromethanesulfonyl) imide (LITFSI).

Les inventeurs ont découvert de façon surprenante qu'en ajoutant un sel d'un métal alcalin et/ou un sel d'un métal alcalino-terreux dans la composition polymérisable, l'électrode a une meilleure conductivité ionique comparé aux électrodes réalisées avec un polymère obtenu à partir d'une composition sans sel d'un métal alcalin et/ou un sel d'un métal alcalino-terreux ajouté. Les inventeurs pensent que la conductivité augmentée est réalisée grâce à une synergie entre le sel du troisième groupement du deuxième polymère et le sel séparé ajouté dans la composition.

Avantageusement, si la composition polymérisable comprend un sel d'un métal alcalin et/ou un sel d'un métal alcalino-terreux, la composition contient entre 0.5% et 5% en poids du sel, de préférence entre 0.75% et 4% en poids, par exemple entre 1% et 3% en poids, basé sur le poids total de la composition polymérisable.

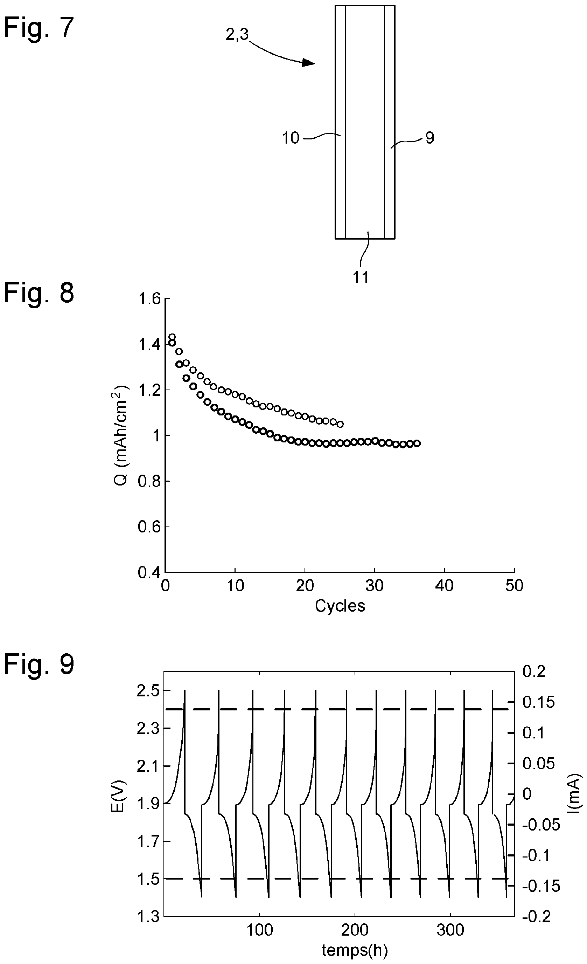

Le polymère agissant comme liant entre la matière active et la matière à base de carbone est obtenu par polymérisation de la composition polymérisable selon la présente divulgation. L'électrode est fabriquée par extrusion ou pressage à chaud en utilisant ce polymère issu de la polymérisation de la composition polymérisable. Le procédé de fabrication est décrit ici plus spécifiquement pour le pressage à chaud (figure 7). Le procédé comporte les étapes de :
- Polymérisation de la composition polymérisable décrite ci-avant pour obtenir le polymère avec au moins un groupe maléimide, un groupe acrylate ou un groupe méthacrylate ;
- Mélange du polymère avec une poudre de la matière active et une poudre de la matière à base de carbone ;
- Pressage à chaud du mélange 11 obtenu pour réaliser l'électrode 2,3.

Avantageusement, le polymère est broyé avant le mélange avec les autres poudres. En variante, c'est le mélange comprenant le polymère et les deux autres poudres qui est broyé avant la polymérisation.

Avantageusement, le procédé comporte une étape additionnelle de congélation du polymère ou du mélange avant l'étape de broyage pour rendre le polymère cassant, cette étape étant, par exemple, réalisée sous azote.

Le pressage est réalisé à une température comprise entre 90°C et 150°C, de préférence entre 100°C et 140°C, sous une force comprise entre 5 kN et 25 kN, de préférence entre 10 kN et 20 kN, pendant un temps compris entre 1 minute et 20 minutes, de préférence entre 3 minutes et 10 minutes.

Avantageusement, le pressage est réalisé entre une feuille 9 et un collecteur de courant 10. La feuille peut être partie intégrante de l'électrode obtenue ou être retirée, voire tombée d'elle-même tout en gardant une électrode fonctionnelle. Par exemple, la feuille peut être une feuille de cellulose agissant comme séparateur et le collecteur de courant peut être réalisé en aluminium ou dans un alliage d'aluminium.

La présente divulgation concerne aussi une cellule comprenant l'électrode sans solvant selon l'invention. La figure 6 montre un exemple d'une cellule 1. Elle a une configuration du type pile bouton, connu dans l'art antérieur comme la configuration du type CR2032.

La cellule 1 comprend une anode 2 et une cathode 3 avec au moins une deux électrodes réalisées avec la formulation selon l'invention. Avantageusement, la cellule 1 comprend en plus un électrolyte polymère solide 4 entre l'anode 2 et la cathode 3 réalisé avec la composition polymérisable décrite ci-avant.

Avantageusement, la cellule 1 comprend en outre un couvercle de pile bouton 5, une base de pile bouton 6, une entretoise 7 et un ressort 8. L'entretoise 7 et le ressort 8 réalisent un bon contact entre les autres composants 2, 3, 4, 5, 6 de la cellule 1.

Les performances de la cellule ont été testées pour une cellule comprenant une cathode selon l'invention avec pour matière active du LiFePO₄ dans une teneur en poids de 70%, un polymère comprenant un groupe maléimide dans une teneur en poids de 28%, et du noir de carbone dans une teneur en poids de 2%. La cathode a été produite en mélangeant les différentes poudres et en les pressant entre une feuille de cellulose et un collecteur de courant en aluminium sous une pression de 15 kN, à une température de 120°C pendant 5 minutes.

La cathode a été assemblée au sein de la batterie comprenant une anode commerciale en Li₄Ti₅O₁₂ (LTO) avec une capacité théorique de 1.25 mAh/cm³ et comprenant un électrolyte liquide standard (LP30).

La durée de vie de la cellule a été testée en chargeant et déchargeant la cellule pendant plus de 30 cycles entre 1.5 V et 2.4 V comme représenté à la figure 9 pour la première dizaine de cycles. La vitesse de cyclage par rapport au LTO était de C/16, ce qui correspond à une charge de 0.140 mA. La charge était réalisée en appliquant un courant constant et la décharge était réalisée en appliquant le même courant mais en négatif. Pendant chaque cycle, la cellule a été chargée à un état de charge de 100% et déchargée à une profondeur de décharge de 100%.

Les résultats pour deux échantillons sont montrés à la figure 8, qui représente la capacité surfacique en fonction du nombre de cycles. Il ressort de la figure 8 que la perte de capacité surfacique après 30 cycles est en dessous de 25% par rapport à la capacité surfacique du premier cycle avec une capacité qui se stabilise après une quinzaine de cycles. La batterie a donc une bonne stabilité de capacité, ce qui signifie une bonne durée de vie.

## Revendications

1. Une électrode (2,3) sans solvant pour une batterie du type lithium-ion comprenant :
- une matière active qui est source d'ions de lithium, capable de recevoir des ions de lithium et/ou de restituer des ions lithium dans sa structure ;
- une matière à base de carbone permettant d'augmenter la conductivité électrique de l'électrode (2,3) ;
**caractérisée en ce qu'**elle comporte en outre un polymère avec au moins un groupe maléimide, un groupe acrylate ou un groupe méthacrylate, ledit polymère faisant office de liant entre la matière active et la matière à base de carbone.

2. Electrode (2,3) sans solvant selon la revendication 1, **caractérisée en ce que** le polymère comporte également un sel d'un métal alcalin et/ou d'un métal alcalino-terreux.

3. Electrode (2,3) sans solvant selon l'une des revendications précédentes, **caractérisée en ce que** ledit au moins groupe maléimide, groupe acrylate ou groupe méthacrylate est un groupe d'extrémité.

4. Electrode (2,3) sans solvant selon la revendication 2 ou 3, **caractérisée en ce que** le polymère comporte au moins un groupe maléimide et un sel de lithium ou de sodium.

5. Electrode (2,3) sans solvant selon l'une des revendications précédentes, **caractérisée en ce que** la matière active comprend du LiFePO4, du LiNiMnCoO2, du LiCoO2, du Li4Ti5O12 ou du graphite, et **en ce que** la matière à base de carbone comporte du charbon actif, du noir de carbone et/ou du graphite.

6. Electrode (2,3) sans solvant selon l'une des revendications précédentes, **caractérisée en ce qu'**elle comporte la matière active dans un pourcentage en poids compris entre 50% et 80%, de préférence entre 60% et 75%, la matière à base de carbone dans un pourcentage en poids compris entre 0.5% et 5%, de préférence entre 1% et 4%, le polymère dans un pourcentage en poids compris entre 10% et 45%, de préférence entre 20% et 35%.

7. Electrode (2,3) sans solvant selon l'une des revendications précédentes, **caractérisée en ce que** ledit polymère est obtenu à partir d'une composition polymérisable comprenant :
- un premier polymère comprenant un premier groupement et un deuxième groupement, le premier groupement étant capable de coordonner des cations d'un métal alcalin et/ou d'un métal alcalino-terreux, le deuxième groupement étant photo-activable et/ou thermo-activable ;
- un oligomère ayant au moins deux groupes photo-activables et/ou thermo-activables ;
- un deuxième polymère comprenant un troisième groupement, le troisième groupement comprenant un sel d'un métal alcalin ou d'un métal alcalino-terreux;
- un plastifiant ;
- un initiateur de polymérisation permettant d'initier la polymérisation entre le deuxième groupement du premier polymère et les groupes photo-activables et/ou thermo-activables de l'oligomère sous l'effet d'une température comprise entre 20°C et 150°C ou d'un rayonnement ;
- un ou plusieurs du deuxième groupement et des groupes photo-activables et/ou thermo-activables étant un groupe maléimide, un groupe acrylate ou un groupe méthacrylate.

8. Electrode (2,3) sans solvant selon la revendication précédente, **caractérisée en ce que** la composition polymérisable comprend entre 10% et 50% en poids du premier polymère, entre 1% et 20% en poids de l'oligomère, entre 1% et 20% en poids du deuxième polymère, entre 20% et 60% en poids du plastifiant, et entre 0.01% et 2% en poids de l'initiateur de polymérisation, basé sur le poids total de la composition polymérisable.

9. Electrode (2,3) sans solvant selon la revendication 7 ou 8, **caractérisée en ce que** la composition polymérisable comprend en outre entre 0.5% et 5% en poids d'un sel d'un métal alcalin et/ou un sel d'un métal alcalino-terreux, basé sur le poids total de la composition polymérisable.

10. Electrode (2,3) sans solvant selon l'une des revendications 7 à 9, **caractérisée en ce que** le premier groupement de la composition polymérisable comporte un groupement d'oxyde de polyéthylène.

11. Une cellule (1) comprenant pour au moins une des deux électrodes (2,3), une électrode (2,3) sans solvant selon l'une quelconque des revendications précédentes.

12. Cellule (1) selon la revendication précédente, comprenant en outre un électrolyte solide réalisé à base dudit polymère avec au moins un groupe maléimide, un groupe acrylate ou un groupe méthacrylate.

13. Un procédé de fabrication de l'électrode (2,3) sans solvant selon l'une des revendications 1 à 10, comprenant les étapes de :
- Polymérisation de la composition polymérisable selon l'une des revendications 7 à 10 pour obtenir le polymère avec au moins un groupe maléimide, un groupe acrylate ou un groupe méthacrylate ;
- Mélange du polymère avec une poudre de la matière active et une poudre de la matière à base de carbone ;
- Pressage à chaud du mélange (11) obtenu pour réaliser l'électrode (2,3).

14. Procédé de fabrication de l'électrode (2,3) sans solvant selon la revendication précédente, **caractérisé en ce que** le pressage est réalisé à une température comprise entre 90°C et 150°C, de préférence entre 100°C et 140°C, sous une force comprise entre 5 kN et 25 kN, de préférence entre 10 kN et 20 kN, pendant un temps compris entre 1 minute et 20 minutes, de préférence entre 3 minutes et 10 minutes.

15. Procédé de fabrication de l'électrode (2,3) sans solvant selon la revendication 13 ou 14, **caractérisé en ce que** le mélange (11) est pressé entre une feuille (9) et un collecteur de courant (10).

16. Procédé de fabrication de l'électrode (2,3) sans solvant selon l'une des revendications 13 à 15, **caractérisé en ce qu'**il y a une étape de broyage du polymère avant l'étape de mélange ou après l'étape de mélange.
